# NEW EUROPEAN PATENT SPECIFICATION

(11) **EP 0 352 371 B2**
(45) Date of publication and mention of the opposition decision: **27.03.1996**
(45) Mention of the grant of the patent: 08.07.1992
(21) Application number: 88202518.2
(22) Date of filing: 11.11.1988
(51) Int. Cl.: G01M 3/04, G01M 3/20

(54) **Detector for helium leaks**
Heliumleckdetektor
Détecteur pour fuites d'hélium

(30) Priority: 27.07.1988 IT 6771188
(43) Date of publication of application: 31.01.1990
(73) Proprietor: VARIAN S.p.A., I-10040 Leini (Torino) (IT)
(72) Inventor: Audi, Mauro, I-10098 Rivoli (Turin) (IT)
(74) Representative: Robba, Eugenio

(56) References cited:
- EP-A- 0 242 684
- DE-A- 1 648 484
- FR-A- 1 310 649
- PATENT ABSTRACTS OF JAPAN vol. 9, no. 296 (P-407)(2019), 22 November 1985; & JP-A-60133340

## Description

The present invention refers to an improved detector for helium leaks.

Italian Patent No. 1 179 600 in the name of the same applicant discloses a helium detector based on the properties of certain materials to be permeable to certain gases in a highly selective manner, so as to behave -under given circumstances- as a mass filter transparent in respect of one gas only, being almost completely opaque to the others.

Among these materials, silica glass or quartz is known for making up a selectively transparent filter -in respect of the atmospheric gases- to helium only.

In the production of a detector for industrial use based on this principle, a number of difficulties are encountered and a number of problems have to be solved.

As an example, it is necessary to find the most suitable geometry for the silica membrane, and it is necessary to positively define the surface and thickness thereof since in the above patent a suitable membrane to this aim is neither disclosed, nor suggestions are supplied for its manufacturing.

Severe difficulties are to be encountered also in connecting the membrane inner chamber to the vacuum pump through a vacuum line.

It is further necessary to modify the system which detects and quantifies the helium leak downward the membrane since a method based on a measurement of the membrane temperature is not satisfactory.

The object of the present invention is therefore to provide an improved detector for helium leaks, of the so-called "sniffer" type, based on the use of a silica glass membrane being selectively permeable to helium only, with a relatively simple construction, high performances and safe and reliable operation.

DE-A-1 648 484 discloses a detector for helium leaks as set out in the pre-amble of claim 1. The present invention improves on this detector by adding the features of the characterising clause of claim 1.

A preferred, exemplary and non limiting embodiment of the invention will now be described with reference to the attached drawings, in which:

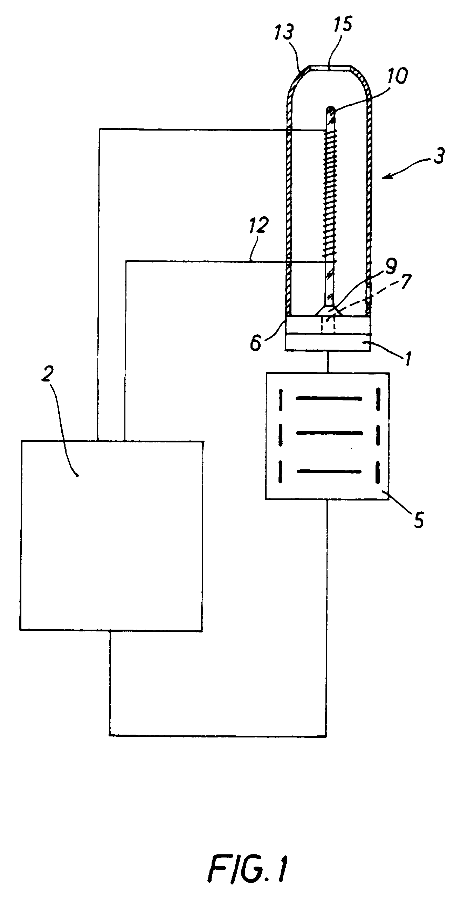

- Fig. 1 schematically shows the detector according to the invention;
- Fig. 2 schematically shows an enlarged detail of the detector of Fig. 1;
- Fig. 3 schematically shows another embodiment of the invention; and
- Figs. 4, 5 and 6 are diagrams illustrating some operating features of the detector according to the invention.

With reference to Fig.s 1 and 2, the helium leak detector according to the invention comprises a vacuum system made up by a small ionic pump 1, a control and high voltage power supply unit generally marked with 2, and a probe 3 of the "sniffer" type.

For the proper operation of the detector ultra high vacuum conditions (UHV) are required, i.e. pressures not higher than 10⁻⁸ mbar that Are obtained through an ion pump fed with a 3 kV voltage and a 0.15 Tesla (1500 gauss) magnetic field.

The suction inlet 5 of the ionic pump is sealingly closed by a flange 6 having a hole 7 in correspondence of which a capillary tube 10 of a glass with high silica content is mounted through a ultra high vacuum seal 9, the tube being opened at the bottom in direct connection with the pump 1, and closed at the top. In the present description with the expression "glass with high silica content" is meant a glass formed by at least 80% silica, such as a glass sold under trade name Pyrex by Corning Glass Works (81% SiO₂) or trade mark Vycor (96% SiO₂). or preferably a glass formed by 100% of SiO₂.

The silica glass capillary tube 10 constitutes the membrane which is selectively permeable to helium only and not to the other gases in order to allow the passage towards the ion pump only of the helium which is to be detected there.

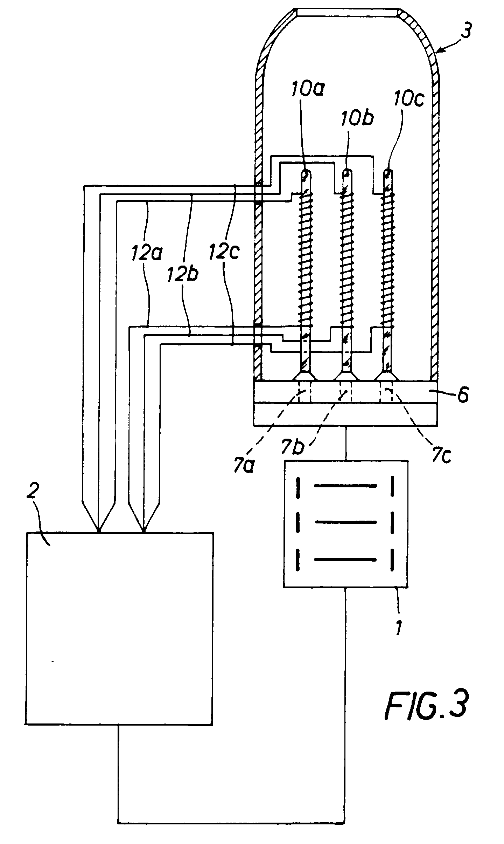

Both the shape and the size of the tube 10 proved themselves to be critical for the working of the detector. Namely it has been found that its wall thickness must be comprised between 1 and 300 micron: therefore the tube is substantially a capillary tube. It was further discovered that the overall surface of the silica glass forming the selective membrane must be comprised between 0,1 and 10 cm, whereas surfaces comprised between 0,5 and 2,5 cm are to be considered the best ones. For larger surfaces one can use more capillary tubes 10a, 10b, 10c mounted in correspondence of as many holes 7a, 7b, 7c drilled in the flange 6 as seen in Fig. 3.

The tube 10 is to be heated to a temperature between 300 and 900°C at which it exhibits the desired properties of selective permeability. A preferred temperature for the tube is 750°C.

The heating of tube 10 can take place by means of radiation from a suitable source, or more advantageously, by thermal conduction. In this latter case the heating means can be a metal filament 12 wound around the tube, e.g. a platinum filament, or a metal path deposited over the tube. In the embodiment providing for two or more tubes 10a, 10b, 10c, a heater 12a 12b, 12c will be provided for each tube, all the heaters being connected together. In any case, the heating means is connected to a command device in the control unit 2 of the detector.

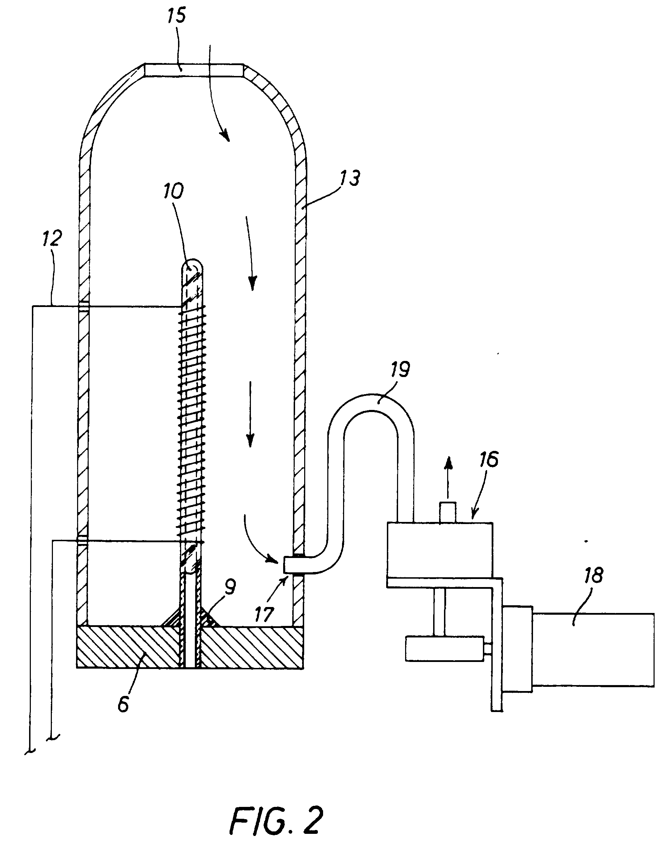

Around the tube 10 there is provided protection envelope 13 with an opening 15 for the gas inlet. In order to promote the helium flow around the tube 10, a sampling pump 16 can be connected to an opening 17 in the base of the protection envelope 13, as shown in Fig. 2. The sampling pump 16 is actuated by a motor 18 and is coupled to opening 17 through a duct 19. Thanks to this forced suction system, the gas flow to the tube 10 is promoted and consequentely helium detection is improved.

When realizing the detector with the above illustrated features and maintaining the temperature of the silica glass capillary tube within tha above mentioned temperature range, in steady state and without helium leaks nearby, the rate of gas flow pumped by the ion pump is only due to the gas continuously desorbed by the components of the vacuum system, and to the passage through the probe of the helium usually present in the atmosphere. This total flow is less than 10⁻⁷ mbar x 1/s and the corresponding ionic current drain of the pump is less than 1 µA.

When the detector probe approaches a helium leak, the number of molecules crossing the walls of the silica glass tube increases, and the same happens to the ionic current of the pump. This current Increase is detected and processed by an electronic device which is part of the control unit 2 described later.

The indication of the helium presence is therefore obtained through the increase signal of the current drawn by the ion pump.

In presence of quite large helium leaks, to prevent a large amount of helium from passing through the probe, thus interfering with the successive measurements, the heating means of the silica glass tube are slaved to a command device which disables them as soon as the current drawn by the pump exceeds a predetermined threshold, e.g. 2 µA. This cause a quick cooling of the tube 10 and a substantial decrease of its permeability to helium.

The amount of the helium leak is calculated from the derivative of the current signal detected at the pump, that is from the ratio between the current increase in respect of the threshold value, and the short time interval in which such increase takes place, as it is shown in the graphs of Fig.s 4, 5 and 6.

In each graph the ionic current drawn by the pump is represented on the ordinate axis as a function of the detection time which is represented on the abscissa axis. In phantom line is further represented the variation of the helium partial pressure p(He) outside the probe, which is dependent on the leak amount.

In each graph a threshold current value disenabling the heater, e.g. less than 2 µA, has been marked as I₂. The value of the ionic current which is not usually exceeded when the probe is not near helium leaks is marked as l₁, such value being not greater than 1 µA.

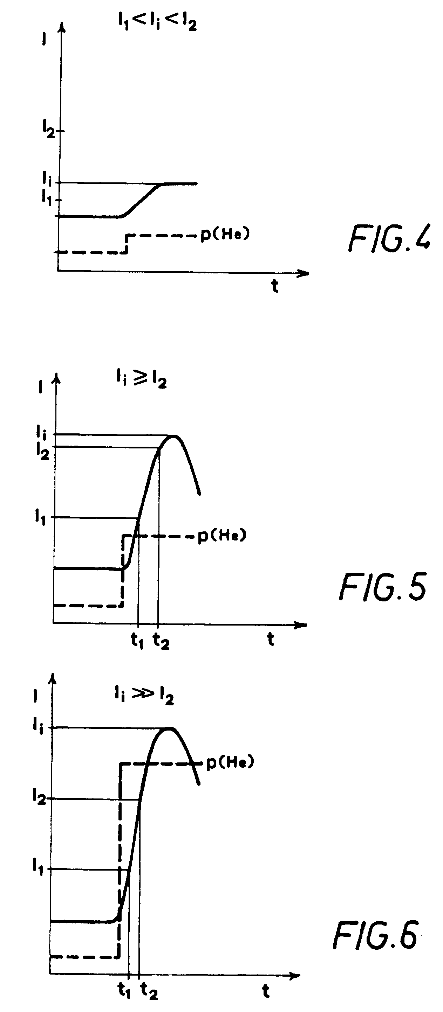

The situation shown in Fig. 4 is that of a small helium leak causing a small increase of the helium partial pressure outside the probe, and a small current increase of the ion pump, represented by the value l₁ which is lower than the threshold l₂. In this particular situation the real current value l₁, where l₁ < l₁ < l₂, is used as an indication of the leak amount. The heater is maintained on since the current does not reach the value l₂ of the disenabling threshold.

Fig. 5 illustrates the situation ol a helium leak of such amount as to cause a current just greater than the threshold l₂. The signal to be considered for determining the amount of the leak will be obtained from the ratio (l₂-l₁)/(t₂-t₁). The command means for the healer, being part of the detector control unit, causes the heater to be turned off when l₁ = l₂.

Fig. 6 illustrates a situation of large helium leak with a correspondingly large current increase in a very short time. In this case too, the leak amount is determined from the ratio (l₂-l₁)/(t₂-t₁ ) and the heater is turned off when when the threshold l₂ is exceeded.

At any rate, the current drawn by the pump is continuously read by a measuring circuit which is part of the control unit 2, in the return path from the pump to the high voltage power supply.

In the following is disclosed an example of a measuring circuit able to detect and quantity a leak from the increase in the current drawn by the ion pump, with reference to the already explained symbols.

Voltage l is converted into a voltage value V= Rl, e.g. by means of an electrometers The voltage V is continuously compared with two thresholds, the first one corresponding to a current value l₁ (≈ 1 µA), and the second one corresponding to a current value l₂ (≈ 2 µA). Two cases are possible:

1st case. When the current exceeds l₁ (time t₁), the counter starts counting; if 12 is exceeded too, then the counter stops (time t₂) and the time elapsed between t₁ and t₂ is read; from the ratio (l₂-l₁)/(t₂-t₁) the leak is calculated and displayed as explained above. Then the counter is reset and is ready to accept a new measurement.

When the current exceeds l₂ the circuit turns off the heater which will be turned on only when the current decreases below the threshold l₁.

2nd case. If the current exceeds l₁, but within a given time, e.g. 10 seconds, it does not reach the threshold l₂, the counter is reset anyway, the heater remains on and the current value is used to quantify the helium leak.

This method for determining the leak through the detection of the current signal is of great advantage for its simplicity and effectiveness. More precisely the method is an improvement over the method based on temperature measurements as disclosed in the already mentioned patent, since it is independent from the pumping rate of the ion pump.

## Claims

1. A detector for helium leaks comprising:
an ion pump connected to a probe of a glass with high silica content and able to act as a mass filter substantially permeable to helium only,
heating means (12) for heating said probe,
**characterized in that** said probe is formed by one or more capillary tubes (10) of a glass with high silica content, substantially impermeable to helium at room temperature, and capable of acting as a mass filter substantially permeable to helium only, said tube(s) being closed at one end and mounted with the other end(s) through a vacuum seal (9) on a flange (6) of said ion pump (1), the overall surface or said capillary tube(s) being comprised between 0.1 and 10 cm,
said heating means (12) substantially surrounding said tube (10) lengthwise for maintaining said tube(s) (10) at a temperature comprised between 300 and 900°C,
and in that said detector further comprises a device for detecting small increments of the ion pump current, and a command device for disabling said heating means (12) when the current detected by said detecting means exceeds a predetermined threshold.

2. A detector as claimed in claim 1, characterized in that said capillary tube (10) of a glass with high silica content is directely mounted with its open end, on the suction inlet (5) of the ion pump (1).

3. A detector as claimed in claim 1, characterized in that it comprises a protection envelope (13) for said silica glass tube (10), provided with openings (15) for gas inlet.

4. A detector as claimed in claims 1 and 3, characterized in that it comprises a sampling pump (16) connected for suction to the inner of said protection envelope (13) in order to promote the gas flow towards said silica glass tube (10).

5. A detector as claimed in claim 1, characterized in that said silica glass tube has a thickness comprised between 1 and 100 micron.

## Patentansprüche

1. Heliumleckdetektor, welcher aufweist:
eine lonenpumpe, die mit einer Sonde aus einem Glas mit einem hohen Gehalt an Kieselerde verbunden ist, welche die Fähigkeit besitzt, als Massenfilter zu wirken, das im wesentlichen nur für Helium durchlässig ist,
ein Beheizungsmittel (12) zum Beheizen der genannten Sonde, dadurch gekennzeichnet, daß die genannte Sonde durch eines oder mehrere Kapillarrohre (10) aus einem Glas mit hohem Kieselerdegehalt gebildet ist, das für Helium bei Raumtemperatur im wesentlichen undurchlässig und dazu fähig ist, als Massenfilter zu wirken, das im wesentlichen ausschließlich für Helium durchlässig ist, daß das (die) genannte(n) Rohr(e) am einen Ende geschlossen und mit dem (den) anderen(n) Ende(n) über eine Unterdruckdichtung (9) an einem Flansch (6) der genannten lonenpumpe angebracht ist (sind), wobei die Gesamtoberfläche vom genannten Kapillarrohr (e) zwischen 0,1 und 10 cm beträgt,
daß das genannte Beheizugsmittel (12) das genannte Rohr (10) in Längsrichtung im wesentlichen umgibt, um das (die) genannte(n) Rohr(e) (10) auf einer Temperatur zwischen 300 und 900°C zu halten,
und daß der genannte Detektor außerdem eine Vorrichtung zur Ermittlung kleiner Inkremente des lonenpumpenstroms sowie eine Steuervorrichtung aufweist, um das genannte Beheizungsmittel (12) abzuschalten, wenn der von der genannten Ermittlungsvorrichtung ermittelte Strom einen vorbestimmten Schwellenwert überschreitet.

2. Detektor nach Anspruch 1, dadurch gekennzeichnet, daß das genannte Kapillarrohr (10) aus einem Glas mit einem hohen Gehalt an Kieselerde unmittelbar mit seinem offenen Ende an dem Saugeinlaß (5) der lonenpumpe (1) angeordnet ist.

3. Detektor nach Anspruch 1, dadurch gekennzeichnet, daß er eine Schutzhülle (13) für das genannte Quarzglasrohr (10) aufweist, die mit Öffnungen (15) für den Gaseintritt versehen ist.

4. Detektor nach den Ansprüchen 1 und 3, dadurch gekennzeichnet, daß er eine Probenpumpe (16) aufweist, die zum Absaugen mit dem Inneren der geannnten Schutzhülle (13) verbunden ist, um den Gasstrom in Richtung auf das genannte Quarzglasrohr (10) zu fördern.

5. Detektor nach Anspruch 1, dadurch gekennzeichnet, daß das genannte Quarzglasrohr eine Stärke zwischen 1 und 100 Mikron aufweist.

## Revendications

1. Un détecteur pour fuites d'hélium comprenant :
une pompe ionique raccordée à une sonde de verre ayant une haute teneur en silice et capable d'agir comme un filtre de masse essentiellement perméable à l'hélium uniquement,
des dispositifs de chauffage (12) pour chauffer ladite sonde,
caractérisé par le fait que ladite sonde est formée d'un ou de plusieurs tubes capillaires (10) de verre ayant une haute teneur en silice, essentiellement imperméable à l'hélium à température ambiante et capable d'agir comme un filtre de masse essentiellement perméable à l'hélium uniquement, ledit (lesdits) tube(s) étant fermé(s) à une extrémité et monté(s) avec l'autre (les autres) extrémité(s) au travers d'un joint de vide (9) sur une bride (6) de ladite pompe ionique (1), la aurface totale dudit (desdits) tube(s) capillaire(s) étant comprise entre 0,1 et 10 cm,
lesdits dispositifs de chauffage (12) entourant essentiellement ledit tube (10) dans le sens longitudinal afin de maintenir ledit (lesdits) tube(s) (10) à une température comprise entre 300 et 900 °C,
et par le fait que ledit détecteur comporte en plus un dispositif pour détecter les faibles augmentations du courant de la pompe ionique et un dispositif de commande pour désactiver lesdits dispositifs de chauffage (12) lorsque le courant détecté par ledit dispositif de détection dépasse un seuil prédéterminé.

2. Un détecteur conforme à la revendication 1, caractérisé par le fait que l'extrémité ouverte dudit tube capillaire (10) de verre à haute teneur en silice est directement montée sur l'entrée aspiration (5) de la pompe ionique (1).

3. Un détecteur conforme à la revendication 1, caractérisé par le fait qu'il comporte une enveloppe de protection (13) pour ledit tube en verre de silice (10), celle-ci étant munie d'orifices (15) pour l'entrée du gaz.

4. Un détecteur conforme aux revendications 1 et 3, caractérisé par le fait qu'il comporte une pompe d'échantillonnage (16) branchée de façon à aspirer vers l'intérieur de ladite enveloppe de protection (13) pour entraîner le flux de gaz en direction dudit tube en verre de silice (10).

5. un détecteur conforme à la revendication 1, caractérisé par le fait que ledit tube en verre de silice a une épaisseur comprise entre 1 et 100 microns.
